# EUROPEAN PATENT APPLICATION

(11) **EP 4 134 350 A1**
(43) Date of publication of application: **15.02.2023**
(21) Application number: 21784985.0
(22) Date of filing: 15.03.2021
(51) Int. Cl.: C01B 25/14, C01G 53/00, H01M 4/13, H01M 4/36, H01M 4/505, H01M 4/525, H01M 4/62, H01M 10/0562, C01F 17/00

(54) **POSITIVE ELECTRODE MATERIAL AND BATTERY**

(30) Priority: 09.04.2020 JP 2020070409
(71) Applicant: Panasonic Intellectual Property Management Co., Ltd., Osaka-shi, Osaka 540-6207 (JP)
(72) Inventor: HASHIMOTO, Kazuya, Osaka 540-6207 (JP); SASAKI, Izuru, Osaka 540-6207 (JP); YABE, Hiroki, Osaka 540-6207 (JP)
(74) Representative: Grünecker Patent- und Rechtsanwälte PartG mbB
(86) International application number: PCT/JP2021/010468
(87) International publication number: WO 2021/205821

(57) **Abstract**

A positive-electrode material 1000 according to the present disclosure includes a positive-electrode active material 110 and a cover layer 111 containing a first solid electrolyte and covering at least partially the surface of the positive-electrode active material 110. The positive-electrode active material 110 and the cover layer 111 constitute a covered active material 130; the positive-electrode active material 110 has a pore volume V_{α}, the covered active material 130 has a pore volume V_{β}, the positive-electrode active material 110 has a specific surface area S_{α}, the covered active material 130 has a specific surface area S_{β}, and at least one selected from the group consisting of 0.20 < V_{β}/V_{α} < 0.88 and 0.81 < S_{β}/S_{α} < 0.97 is satisfied.

## Description

### Technical Field

The present disclosure relates to a positive-electrode material and a battery.

### Background Art

Patent Literature 1 discloses a battery using a halide as a solid electrolyte. Non Patent Literature 1 discloses a battery using a sulfide as a solid electrolyte.

### Citation List

### Patent Literature

PTL 1: International Publication No. 2018/025582

### Non Patent Literature

NPL 1: Journal of Power Sources 159(2006), p193-199.

### Summary of Invention

### Technical Problem

In the related art, the initial efficiency of batteries is desirably increased.

### Solution to Problem

A positive-electrode material according to an aspect of the present disclosure, including
a positive-electrode active material; and
a cover layer containing a first solid electrolyte and covering at least partially a surface of the positive-electrode active material,
wherein the positive-electrode active material and the cover layer constitute a covered active material,
the positive-electrode active material has a pore volume V_{α}, the covered active material has a pore volume V_{β}, the positive-electrode active material has a specific surface area S_{α}, the covered active material has a specific surface area S_{β}, and at least one selected from the group consisting of 0.20 < V_{β}/V_{α} < 0.88 and 0.81 < S_{β}/S_{α} < 0.97 is satisfied. Advantageous Effects of Invention

The present disclosure enables an increase in the initial efficiency of a battery.

### Brief Description of Drawings

[Fig. 1] Fig. 1 is a sectional view illustrating the schematic configuration of a positive-electrode material according to Embodiment 1.
[Fig. 2] Fig. 2 is a sectional view illustrating the schematic configuration of a battery according to Embodiment 2.

### Description of Embodiments

### (Underlying knowledge forming basis of the present disclosure)

PTL 1 discloses that an all-solid-state secondary battery containing a halide solid electrolyte exhibits good charge-discharge characteristics.

On the other hand, the present inventors performed thorough studies and, as a result, have found that the state of contact between the positive-electrode active material and the halide solid electrolyte affects charge efficiency. The present inventors have inferred that the state of contact affects charge efficiency because of the balance between electronic resistance and interfacial resistance. Specifically, a low ratio of contact between the positive-electrode active material and the solid electrolyte results in an increase in the interfacial resistance; a high ratio of contact between the positive-electrode active material and the solid electrolyte results in an increase in the electronic resistance. In order to address such problems, it is important that the state of contact between the positive-electrode active material and the solid electrolyte is provided so as to suppress the two resistance components to low resistances.

NPL 1 discloses that an all-solid-state secondary battery containing a sulfide solid electrolyte exhibits good charge-discharge characteristics.

On the other hand, the present inventors performed thorough studies and, as a result, have found that contact between the positive-electrode active material and the sulfide solid electrolyte results in, during charging of the battery, oxidation-decomposition of the sulfide solid electrolyte. In order to address such a problem, a solid electrolyte having oxidation stability may be used to cover the surface of the positive-electrode active material.

The present inventors then considered that the degree of covering of the positive-electrode active material with the solid electrolyte may be used to adjust the state of contact between the positive-electrode active material and another solid electrolyte. In particular, halide solid electrolytes have higher oxidation stability than the sulfide solid electrolyte, so that the cover layer of such a halide solid electrolyte can be used to suppress oxidation-decomposition of another solid electrolyte.

### (Summary of aspects according to the present disclosure)

A positive-electrode material according to a 1st aspect of the present disclosure, including:
a positive-electrode active material; and
a cover layer containing a first solid electrolyte and covering at least partially a surface of the positive-electrode active material,
wherein the positive-electrode active material and the cover layer constitute a covered active material,
the positive-electrode active material has a pore volume V_{α}, the covered active material has a pore volume V_{β}, the positive-electrode active material has a specific surface area S_{α}, the covered active material has a specific surface area S_{β}, and at least one selected from the group consisting of 0.20 < V_{β}/V_{α} < 0.88 and 0.81 < S_{β}/S_{α} < 0.97 is satisfied.

Such features enable an increase in the initial efficiency of a battery.

For a 2nd aspect according to the present disclosure, for example, in the positive-electrode material according to the 1st aspect, 0.60 ≤ V_{β}/V_{α} ≤ 0.76 may be satisfied. Such a feature enables an increase in the initial efficiency of a battery with certainty.

For a 3rd aspect according to the present disclosure, for example, in the positive-electrode material according to the 1st or 2nd aspect, 0.86 ≤ S_{β}/S_{α} ≤ 0.89 may be satisfied. Such a feature enables an increase in the initial efficiency of a battery with certainty.

For a 4th aspect according to the present disclosure, for example, in the positive-electrode material according to any one of the 1st to 3rd aspects, the positive-electrode active material may have a weight W_{α}, the covered active material may have a weight W_{β}, and 0.90 < W_{α}/W_{β} < 0.99 may be satisfied. Such a feature enables an increase in the initial efficiency of a battery with certainty.

For a 5th aspect according to the present disclosure, for example, in the positive-electrode material according to the 4th aspect, 0.95 ≤ W_{α}/W_{β} ≤ 0.975 may be satisfied. Such a feature enables an increase in the initial efficiency of a battery with certainty.

For a 6th aspect according to the present disclosure, for example, in the positive-electrode material according to any one of the 1st to 5th aspects, the cover layer may have a thickness of greater than 14 nm and less than167 nm. Such a feature enables an increase in the charge efficiency of a battery with certainty.

For a 7th aspect according to the present disclosure, for example, in the positive-electrode material according to any one of the 1st to 6th aspects, the cover layer may have a thickness of greater than or equal to 32 nm and less than or equal to 71 nm. Such a feature enables an increase in the charge efficiency of a battery with certainty.

For an 8th aspect of the present disclosure, for example, in the positive-electrode material according to any one of the 1st to 7th aspects, the first solid electrolyte may be represented by Composition formula (1) below where α1, β1, and γ1 may each be independently a value greater than 0, M1 may include at least one element selected from the group consisting of metallic elements other than Li and metalloid elements, and X1 may include at least one selected from the group consisting of F, Cl, Br, and I. Use of the halide solid electrolyte represented by Formula (1) for a battery enables improvement in power characteristics in the battery.

Li_{α1}M1_{β1}X1_{γ1} Formula (1)

For a 9th aspect according to the present disclosure, for example, in the positive-electrode material according to the 8th aspect, M1 above may include yttrium. Such a feature enables further improvement in the charge-discharge characteristics of a battery.

For a 10th aspect according to the present disclosure, for example, in the positive-electrode material according to the 8th or 9th aspect, 2.5 ≤ α1 ≤ 3, 1 ≤ β1 ≤ 1.1, and γ1 = 6 may be satisfied. Such a feature enables further improvement in the charge-discharge characteristics of a battery.

For an 11th aspect according to the present disclosure, for example, in the positive-electrode material according to any one of the 8th to 10th aspects, X1 above may include at least one selected from the group consisting of Cl and Br. Such a feature enables further improvement in the charge-discharge characteristics of a battery.

For a 12th aspect according to the present disclosure, for example, in the positive-electrode material according to any one of the 8th to 11th aspects, the first solid electrolyte may contain Li₃YBr₂Cl₄. Such a feature enables a further increase in the charge efficiency of a battery.

For a 13th aspect according to the present disclosure, for example, in the positive-electrode material according to any one of the 1st to 12th aspects, the positive-electrode active material may contain Ni, Co, and Mn. Such a feature enables a further increase in the energy density and charge efficiency of a battery.

For a 14th aspect according to the present disclosure, for example, the positive-electrode material according to any one of the 1st to 13th aspects may further include a second solid electrolyte. Such a feature enables sufficient ensuring of ion conductivity in the positive-electrode material.

For a 15th aspect according to the present disclosure, for example, in the positive-electrode material according to the 14th aspect, the first solid electrolyte may have a volume V_{γ}, the second solid electrolyte may have a volume Y_{δ}, and 0.05 < Y_{γ}/Y_{δ} < 0.97 may be satisfied. Such a feature enables a further increase in the energy density and charge efficiency of a battery.

For a 16th aspect according to the present disclosure, for example, in the positive-electrode material according to the 14th or 15th aspect, the second solid electrolyte may be represented by Composition formula (3) below where α2, β2, and γ2 may each be independently a value greater than 0, M2 may include at least one element selected from the group consisting of metallic elements other than Li and metalloid elements, and X2 may include at least one selected from the group consisting of F, Cl, Br, and I. Use of the halide solid electrolyte represented by Formula (3) for a battery enables improvement in power characteristics of the battery.

Li_{α2}M2_{β2}X2_{γ2} Formula (3)

For a 17th aspect according to the present disclosure, for example, in the positive-electrode material according to the 16th aspect, M2 above may include yttrium. Such a feature enables further improvement in the charge-discharge characteristics of a battery.

For an 18th aspect according to the present disclosure, for example, in the positive-electrode material according to the 16th or 17th aspect, 2.5 ≤ α2 ≤ 3, 1 ≤ β2 ≤ 1.1, and γ2 = 6 may be satisfied. Such a feature enables further improvement in the charge-discharge characteristics of a battery.

For a 19th aspect according to the present disclosure, for example, in the positive-electrode material according to any one of the 16th to 18th aspects, X2 above may include at least one selected from the group consisting of Cl and Br. Such a feature enables further improvement in the charge-discharge characteristics of a battery.

For a 20th aspect according to the present disclosure, for example, in the positive-electrode material according to any one of the 16th to 19th aspects, the second solid electrolyte may contain Li₃YBr₂Cl₄. Such a feature enables a further increase in the charge efficiency of a battery.

For a 21st aspect according to the present disclosure, for example, in the positive-electrode material according to the 14th or 15th aspect, the second solid electrolyte may contain a sulfide solid electrolyte. Such a feature enables a further increase in the charge efficiency of a battery.

A battery according to a 22nd aspect of the present disclosure, including
a positive electrode containing the positive-electrode material according to any one of the 14th to 21st aspects;
a negative electrode; and
an electrolyte layer disposed between the positive electrode and the negative electrode.

Such features enable an increase in the initial efficiency of the battery.

Hereinafter, embodiments according to the present disclosure will be described with reference to the drawings.

### (Embodiment 1)

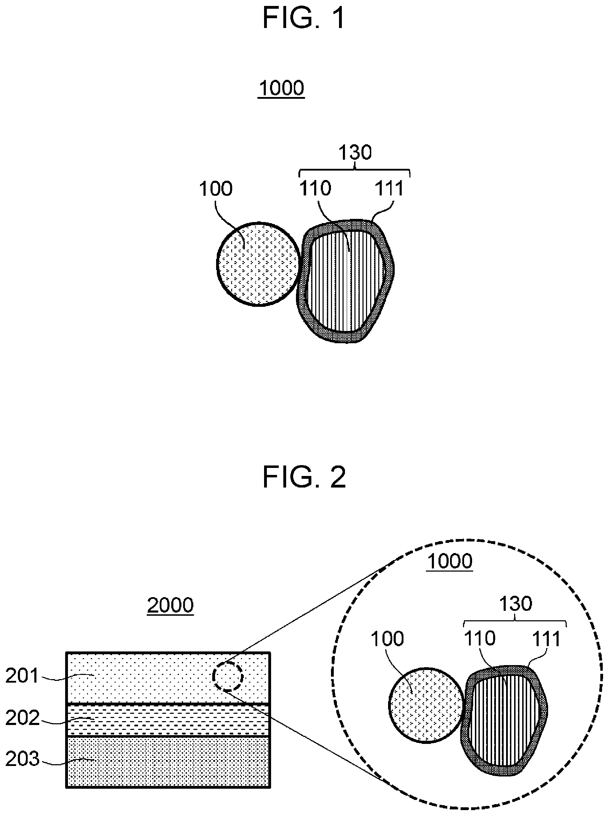

Fig. 1 is a sectional view illustrating the schematic configuration of a positive-electrode material 1000 according to Embodiment 1.

The positive-electrode material 1000 according to Embodiment 1 includes a covered active material 130. The covered active material 130 includes a positive-electrode active material 110 and a cover layer 111. The positive-electrode active material 110 has a form, for example, a particulate form. The cover layer 111 covers at least partially the surface of the positive-electrode active material 110.

The cover layer 111 is a layer containing the first solid electrolyte. On the surface of the positive-electrode active material 110, the cover layer 111 is disposed. The cover layer 111 may contain the first solid electrolyte alone. The phrase "contains the first solid electrolyte alone" means that, except for inevitable impurities, materials other than the first solid electrolyte are not intentionally added. For example, raw materials of the first solid electrolyte, by-products generated during preparation of the first solid electrolyte, and the like are included in the inevitable impurities.

The positive-electrode material 1000 further includes a second solid electrolyte 100. The second solid electrolyte 100 has a form, for example, a particulate form. The second solid electrolyte 100 enables sufficient ensuring of ion conductivity in the positive-electrode material 1000.

The positive-electrode active material 110 is separated, by the cover layer 111, from the second solid electrolyte 100. The positive-electrode active material 110 may not be directly in contact with the second solid electrolyte 100. This is because the cover layer 111 has ion conductivity.

The cover layer 111 may uniformly cover the positive-electrode active material 110. The cover layer 111 suppresses direct contact between the positive-electrode active material 110 and the second solid electrolyte 100, to suppress the side reaction of the second solid electrolyte 100. This results in improvement in charge-discharge characteristics of a battery and enables suppression of an increase in the reaction overvoltage of the battery.

The cover layer 111 may cover only a portion of the surface of the positive-electrode active material 110. Particles of the positive-electrode active material 110 are directly in contact with each other via the portion not covered with the cover layer 111, to increase the electron conductivity of particles of the positive-electrode active material 110. This enables a battery to operate at a high power.

In the positive-electrode material 1000, the positive-electrode active material 110 has a pore volume V_{α}, the covered active material 130 has a pore volume V_{β}, the positive-electrode active material 110 has a specific surface area S_{α}, and the covered active material 130 has a specific surface area S_{β}. In this case, in the positive-electrode material 1000, at least one selected from the group consisting of 0.20 < V_{β}/V_{α} < 0.88 and 0.81 < S_{β}/S_{α} < 0.97 is satisfied.

When the pore volume V_{α} of the positive-electrode active material 110 and the pore volume V_{β} of the covered active material 130 satisfy the relationship of 0.20 < V_{β}/V_{α} < 0.88, a battery using the positive-electrode material 1000 exhibits high initial efficiency. The pore volume ratio V_{β}/V_{α} represents the ratio of change in the pore volume due to formation of the cover layer 111. The change in the pore volume reflects the state of covering, with the cover layer 111, of the positive-electrode active material 110. As the extent of covering, with the cover layer 111, of the positive-electrode active material 110 increases, the pore volume ratio V_{β}/V_{α} decreases. As the extent of covering, with the cover layer 111, of the positive-electrode active material 110 decreases, the pore volume ratio V_{β}/V_{α} increases. An ideal cover state not only contributes to an appropriate balance between electronic resistance and interfacial resistance, but also suppresses, during charging of the battery, formation of oxide films due to oxidation-decomposition of another solid electrolyte (second solid electrolyte 100). This results in an increase in the initial efficiency of the battery.

The term "initial efficiency" means a ratio of a discharge capacity to a charge capacity in the 1st cycle of a battery having been completed.

The pore volume V_{α} of the positive-electrode active material 110 means the pore volume V_{α} of particles of the positive-electrode active material 110. The pore volume V_{β} of the covered active material 130 means the pore volume V_{β} of particles of the covered active material 130. Actually, it is difficult to measure the pore volume of a single particle, and hence the pore volume V_{α} can be the pore volume of a particle group of the positive-electrode active material 110. The pore volume V_{β} can be the pore volume of a particle group of the covered active material 130.

The pore volume ratio V_{β}/V_{α} desirably satisfies the relationship of 0.60 ≤ V_{β}/V_{α} ≤ 0.76. When the pore volume ratio V_{β}/V_{α} is in such a range, the initial efficiency of a battery can be increased with certainty.

The pore volumes V_{α} and V_{β} mean total pore volumes and can be measured by the following method. First, a gas adsorption amount measurement instrument is used to measure an adsorption isotherm. The BJH method is used to determine, from a desorption isotherm, the pore size distribution; from the pore size distribution, the total pore volume (unit: cm³/g) is calculated.

When the specific surface area S_{α} of the positive-electrode active material 110 and the specific surface area S_{β} of the covered active material 130 satisfy the relationship of 0.81 < S_{β}/S_{α} < 0.97, a battery using the positive-electrode material 1000 exhibits high initial efficiency. The specific surface area ratio S_{β}/S_{α} represents the ratio of change in the specific surface area due to formation of the cover layer 111. The change in the specific surface area reflects the state of covering, with the cover layer 111, of the positive-electrode active material 110. As the extent of covering, with the cover layer 111, of the positive-electrode active material 110 increases, the specific surface area ratio S_{β}/S_{α} decreases. As the extent of covering, with the cover layer 111, of the positive-electrode active material 110 decreases, the specific surface area ratio S_{β}/S_{α} increases. An ideal cover state not only contributes to an appropriate balance between electronic resistance and interfacial resistance, but also suppresses, during charging of the battery, formation of oxide films due to oxidation-decomposition of another solid electrolyte (second solid electrolyte 100). This results in an increase in the initial efficiency of the battery.

The specific surface area S_{α} of the positive-electrode active material 110 means the specific surface area S_{α} of a particle group of the positive-electrode active material 110. The specific surface area S_{β} of the covered active material 130 means the specific surface area S_{β} of a particle group of the covered active material 130.

The specific surface area ratio S_{β}/S_{α} desirably satisfies the relationship of 0.86 ≤ S_{β}/S_{α} ≤ 0.89. When the specific surface area ratio S_{β}/S_{α} is in such a range, the initial efficiency of a battery can be increased with certainty.

The specific surface areas S_{α} and S_{β} can be measured by the following method. First, a commercially available gas adsorption amount measurement instrument is used to measure an adsorption isotherm. The BET analysis method is used to calculate, from a desorption isotherm, the specific surface area (unit: m²/g).

Another parameter that reflects the state of covering, with the cover layer 111, the positive-electrode active material 110 may be change in the weight. In the positive-electrode material 1000, the positive-electrode active material 110 has a weight W_{α}, and the covered active material 130 has a weight W_{β}. In this case, in the positive-electrode material 1000, 0.90 < W_{α}/W_{β} < 0.99 is satisfied. When the weight ratio W_{α}/W_{β} is in such a range, the initial efficiency of a battery can be increased with certainty.

When the weight W_{α} of the positive-electrode active material 110 and the weight W_{β} of the covered active material 130 satisfy the relationship of 0.90 < W_{α}/W_{β} < 0.99, a battery using the positive-electrode material 1000 exhibits high initial efficiency. The weight ratio W_{α}/W_{β} represents change in the weight due to formation of the cover layer 111. The change in the weight reflects the state of covering, with the cover layer 111, of the positive-electrode active material 110. As the extent of covering, with the cover layer 111, of the positive-electrode active material 110 increases, the weight ratio W_{α}/W_{β} decreases. As the extent of covering, with the cover layer 111, of the positive-electrode active material 110 decreases, the weight ratio W_{α}/W_{β} increases. An ideal cover state not only contributes to an appropriate balance between electronic resistance and interfacial resistance, but also suppresses, during charging of the battery, formation of oxide films due to oxidation-decomposition of another solid electrolyte (second solid electrolyte 100). This results in an increase in the initial efficiency of the battery.

The weight W_{α} of the positive-electrode active material 110 means the weight W_{α} of a particle group of the positive-electrode active material 110. The weight W_{β} of the covered active material 130 means the weight W_{β} of a particle group of the covered active material 130.

The weight ratio W_{α}/W_{β} desirably satisfies the relationship of 0.95 ≤ W_{α}/W_{β} ≤ 0.975. When the weight ratio W_{α}/W_{β} is in such a range, the initial efficiency of a battery can be increased with certainty.

The cover layer 111 has a thickness of, for example, greater than or equal to 1 nm. When the thickness of the cover layer 111 is appropriately adjusted, contact between the positive-electrode active material 110 and the second solid electrolyte 100 is suppressed, and the side reaction of the second solid electrolyte 100 can be suppressed. This enables an increase in the charge efficiency of a battery.

The cover layer 111 may have a thickness of greater than 14 nm and less than 167 nm. The cover layer 111 desirably has a thickness of greater than or equal to 32 nm and less than or equal to 71 nm. Such a feature enables an increase in the charge efficiency of a battery with certainty.

The thickness of the cover layer 111 can be measured by the following method. First, the covered active material 130 is subjected to an ion milling treatment. Subsequently, an electron microscope is used to observe a cross-section of particles of the covered active material 130. In the field of view observed, at a plurality of (for example, 3) points randomly selected, the thicknesses of the cover layer 111 are measured. The obtained measured values are averaged and the resultant value can be regarded as the thickness of the cover layer 111.

From the covered active material 130, the cover layer 111 may be removed, and the positive-electrode active material 110 can be measured in terms of pore volume, specific surface area, and the like. For example, a solvent in which the cover layer 111 is soluble and the positive-electrode active material 110 is insoluble is used to remove the cover layer 111, and drying is performed, to thereby obtain the positive-electrode active material 110 on which the cover layer 111 is to be formed.

The positive-electrode active material 110, the cover layer 111, and the second solid electrolyte 100 will be described further in detail.

### (Cover layer 111)

As the first solid electrolyte contained in the cover layer 111, a material that has low electron conductivity and has oxidation resistance can be employed. For example, as the first solid electrolyte, a halide solid electrolyte can be employed.

The halide solid electrolyte has high ion conductivity and high high-potential stability. Thus, use of the halide solid electrolyte enables a further increase in the charge efficiency of a battery and further suppression of the increase in the reaction overvoltage of the battery.

The first solid electrolyte contained in the cover layer 111 may be a halide solid electrolyte.

The halide solid electrolyte is represented by, for example, Composition formula (1) below. In Composition formula (1), α1, β1, and γ1 are each independently a value greater than 0. M1 includes at least one element selected from the group consisting of metallic elements other than Li and metalloid elements. X1 includes at least one selected from the group consisting of F, Cl, Br, and I.

Li_{α1}M1_{β1}X1_{γ1} Formula (1)

The term "metalloid elements" includes B, Si, Ge, As, Sb, and Te.

The term "metallic elements" includes, in the periodic table, all the elements included in group 1 through group 12 except for hydrogen, and all the elements included in group 13 through group16 except for B, Si, Ge, As, Sb, Te, C, N, P, O, S, and Se. In other words, the metallic elements are a group of elements that can be turned into cations in the case of forming inorganic compounds with halogen compounds.

The halide solid electrolyte represented by Formula (1) has higher ion conductivity than halide solid electrolytes composed only of Li and a halogen element such as LiI. Thus, use of the halide solid electrolyte represented by Formula (1) for a battery enables improvement in power characteristics in the battery.

In the present disclosure, when an element in a formula is described as "(Al, Ga, In)", this written form represents at least one element selected from the group consisting of elements in the parentheses. In other words, "(Al, Ga, In)" means the same as "at least one selected from the group consisting of Al, Ga, and In". The same applies to other elements.

In Composition formula (1), M1 may include Y (= yttrium). Thus, the first solid electrolyte may include, as a metallic element, Y.

Such a feature enables a further increase in the ion conductivity of the first solid electrolyte. This enables further improvement in the charge-discharge characteristics of a battery.

In Composition formula (1), 2.5 ≤ α1 ≤ 3, 1 ≤ β1 ≤ 1.1, and γ1 = 6 may be satisfied.

Such a feature enables a further increase in the ion conductivity of the first solid electrolyte. This enables further improvement in the charge-discharge characteristics of a battery.

X1 may include at least one selected from the group consisting of Cl and Br. X1 may include Cl and Br.

Such a feature enables a further increase in the ion conductivity of the first solid electrolyte. This enables further improvement in the charge-discharge characteristics of a battery.

The halide solid electrolyte containing Y may be a compound represented by the following Composition formula (2).

LiₐMe_{b}Y_{c}X₆ Formula (2)

In Composition formula (2), a + mb + 3c = 6 and c > 0 are satisfied. In Composition formula (2), Me includes at least one element selected from the group consisting of metallic elements other than Li and Y and metalloid elements, m represents the valence number of Me. X includes at least one selected from the group consisting of F, Cl, Br, and I.

Me may include at least one selected from the group consisting of Mg, Ca, Sr, Ba, Zn, Sc, Al, Ga, Bi, Zr, Hf, Ti, Sn, Ta, and Nb.

Such a feature enables a further increase in the ion conductivity of the first solid electrolyte. Note that the halide solid electrolyte does not necessarily contain sulfur.

The first solid electrolyte may be a compound represented by Composition formula (A1) below. In Composition formula (A1), X is at least one element selected from the group consisting of Cl and Br. In Composition formula (A1), 0 < d < 2 is satisfied.

Li₆₋₃ₐY_{d}X₆ Formula (A1)

Such a feature enables a further increase in the ion conductivity of the first solid electrolyte. This enables a further increase in the charge efficiency of a battery.

The first solid electrolyte may be a compound represented by Composition formula (A2) below. In Composition formula (A2), X is at least one element selected from the group consisting of Cl and Br.

Li₃YX₆ Formula (A2)

Such a feature enables a further increase in the ion conductivity of the first solid electrolyte. This enables a further increase in the charge efficiency of a battery.

The first solid electrolyte may be a compound represented by Composition formula (A3) below. In Composition formula (A3), 0 < δ ≤ 0.15 is satisfied.

Li_{3-3δ}Y_{1+δ}Cl₆ Formula (A3)

Such a feature enables a further increase in the ion conductivity of the first solid electrolyte. This enables a further increase in the charge efficiency of a battery.

The first solid electrolyte may be a compound represented by Composition formula (A4) below. In Composition formula (A4), 0 < δ ≤ 0.25 is satisfied.

Li_{3-3δ}Y_{1+δ}Br₆ Formula (A4)

Such a feature enables a further increase in the ion conductivity of the first solid electrolyte. This enables a further increase in the charge efficiency of a battery.

The first solid electrolyte may be a compound represented by Composition formula (A5) below. In Composition formula (A5), Me is at least one element selected from the group consisting of Mg, Ca, Sr, Ba, and Zn. In Composition formula (A5), -1 < δ < 2, 0 < a < 3, 0 < (3 - 3δ + a), 0 < (1 + δ - a), and 0 ≤ x ≤ 6 are satisfied.

Li_{3-3δ+a}Y_{1+δ-a}MeₐCl₆₋ₓBrₓ Formula (A5)

Such a feature enables a further increase in the ion conductivity of the first solid electrolyte. This enables a further increase in the charge efficiency of a battery.

The first solid electrolyte may be a compound represented by Composition formula (A6) below. In Composition formula (A6), Me is at least one element selected from the group consisting of Al, Sc, Ga, and Bi. In Composition formula (A6), -1 < δ < 1, 0 < a < 2, 0 < (1 + δ - a), and 0 ≤ x ≤ 6 are satisfied.

Li_{3-3δ}Y_{1+δ-a}MeₐCl₆₋ₓBrₓ Formula (A6)

Such a feature enables a further increase in the ion conductivity of the first solid electrolyte. This enables a further increase in the charge efficiency of a battery.

The first solid electrolyte may be a compound represented by Composition formula (A7) below. In Composition formula (A7), Me is at least one element selected from the group consisting of Zr, Hf, and Ti. In Composition formula (A7), -1 < δ < 1, 0 < a < 1.5, 0 < (3 - 3δ - a), 0 < (1 + δ - a), and 0 ≤ x ≤ 6 are satisfied.

Li_{3-3δ-a}Y₁₊₈₋ₐMeₐCl₆₋ₓBrₓ Formula (A7)

Such a feature enables a further increase in the ion conductivity of the first solid electrolyte. This enables a further increase in the charge efficiency of a battery.

The first solid electrolyte may be a compound represented by Composition formula (A8) below. In Composition formula (A8), Me is at least one element selected from the group consisting of Ta and Nb. In Composition formula (A8), -1 < δ < 1, 0 < a < 1.2, 0 < (3 - 3δ - 2a), 0 < (1 + δ - a), and 0 ≤ x ≤ 6 are satisfied.

Li_{3-3δ-2a}Y_{1+δ-a}MeₐCl₆₋ₓBrₓ Formula (A8)

Such a feature enables a further increase in the ion conductivity of the first solid electrolyte. This enables a further increase in the charge efficiency of a battery.

As the first solid electrolyte, for example, Li₃YX₆, Li₂MgX₄, Li₂FeX₄, Li(Al, Ga, In)X₄, or Li₃(Al, Ga, In)X₆ can be employed where X includes at least one element selected from the group consisting of Cl and Br.

The representative composition of Li₃YX₆ is, for example, Li₃YBr₂Cl₄. The first solid electrolyte may include Li₃YBr₂Cl₄.

The first solid electrolyte may be Li_{2.7}Y_{1.1}Cl₆, Li₃YBr₆, or Li_{2.5}Y_{0.5}Zr_{0.5}Cl₆.

Such a feature enables a further increase in the charge efficiency of a battery.

### (Second solid electrolyte)

The second solid electrolyte 100 contains a material having high ion conductivity. The second solid electrolyte can be a halide solid electrolyte. As the second solid electrolyte 100, a compound represented by Composition formula (3) below can be employed. In Composition formula (3), α2, β2, and γ2 are each independently a value greater than 0. M2 includes at least one element selected from the group consisting of metallic elements other than Li and metalloid elements. X2 includes at least one selected from the group consisting of F, Cl, Br, and I.

Li_{α2}M2_{β2}X2_{γ2} Formula (3)

Such features enable a further increase in the ion conductivity of the second solid electrolyte 100. This enables a further increase in the charge efficiency of a battery.

In Composition formula (3), M2 may include Y. Thus, the second solid electrolyte 100 may include, as a metallic element, Y.

Such a feature enables a further increase in the ion conductivity of the second solid electrolyte 100. This enables further improvement in the charge-discharge characteristics of a battery.

In Composition formula (3), 2.5 ≤ α2 ≤ 3, 1 ≤ β2 ≤ 1.1, and γ2 = 6 may be satisfied.

Such a feature enables a further increase in the ion conductivity of the second solid electrolyte 100. This enables further improvement in the charge-discharge characteristics of a battery.

In Composition formula (3), X2 may include at least one selected from the group consisting of Br (= bromine) and Cl (= chlorine).

Such a feature enables a further increase in the ion conductivity of the second solid electrolyte 100. This enables further improvement in the charge-discharge characteristics of a battery.

In Composition formula (3), X2 may include Br and Cl.

Such a feature enables a further increase in the ion conductivity of the second solid electrolyte 100. This enables further improvement in the charge-discharge characteristics of a battery.

The second solid electrolyte 100 may be a compound represented by Composition formula (B 1) below. In Composition formula (B 1), X includes at least one selected from the group consisting of F, Cl, Br, and I. In Composition formula (B 1), 0 < d < 2 is satisfied.

Li_{6-3d}Y_{d}X₆ Formula (B 1)

Such a feature enables a further increase in the ion conductivity of the second solid electrolyte 100. This enables a further increase in the charge efficiency of a battery.

The second solid electrolyte 100 may be a compound represented by Composition formula (B2) below. In Composition formula (B2), X includes at least one selected from the group consisting of F, Cl, Br, and I.

Li₃YX₆ Formula (B2)

Such a feature enables a further increase in the ion conductivity of the second solid electrolyte 100. This enables a further increase in the charge efficiency of a battery.

The second solid electrolyte 100 may be a compound represented by Composition formula (B3) below. In Composition formula (B3), Me is at least one element selected from the group consisting of Mg, Ca, Sr, Ba, and Zn. In Composition formula (B3), -1 < δ < 2, 0 < a < 3, 0 < (3 - 3δ + a), 0 < (1 + δ - a), 0 ≤ x < 6, 0 < y ≤ 6, and (x + y) < 6 are satisfied.

Li_{3-3δ+a}Y_{1+δ-a}MeₐCl_{6-x-y}BrₓI_{y} Formula (B3)

Such a feature enables a further increase in the ion conductivity of the second solid electrolyte 100. This enables a further increase in the charge efficiency of a battery.

The second solid electrolyte 100 may be a compound represented by Composition formula (B4) below. In Composition formula (B4), Me is at least one element selected from the group consisting of Al, Sc, Ga, and Bi. In Composition formula (B4), -1 < δ < 1, 0 < a < 2, 0 < (1 + δ - a), 0 ≤ x < 6, 0 < y ≤ 6, and (x + y) < 6 are satisfied.

Li_{3-3δ}Y_{1+δ-a}MeₐCl_{6-x-y}BrₓI_{y} Formula (B4)

Such a feature enables a further increase in the ion conductivity of the second solid electrolyte 100. This enables a further increase in the charge efficiency of a battery.

The second solid electrolyte 100 may be a compound represented by Composition formula (B5) below. In Composition formula (B5), Me is at least one element selected from the group consisting of Zr, Hf, and Ti. In Composition formula (B5), -1 < δ < 1, 0 < a < 1.5, 0 < (3 - 3δ - a), 0 < (1 + δ - a), 0 ≤ x < 6, 0 < y ≤ 6, and (x + y) < 6 are satisfied.

Li_{3-3δ-a}Y_{1+δ-a}MeₐCl_{6-x-y}BrₓI_{y} Formula (B5)

Such a feature enables a further increase in the ion conductivity of the second solid electrolyte 100. This enables a further increase in the charge efficiency of a battery.

The second solid electrolyte 100 may be a compound represented by Composition formula (B6) below. In Composition formula (B6), Me is at least one element selected from the group consisting of Ta and Nb. In Composition formula (B6), -1 < δ < 1, 0 < a < 1.2, 0 < (3 - 3δ - 2a), 0 < (1 + δ - a), 0 ≤ x < 6, 0 < y ≤ 6, and (x + y) < 6 are satisfied.

Li_{3-3δ-2a}Y_{1+δ-a}MeₐCl_{6-x-y}BrₓI_{y} Formula (B6)

Such a feature enables a further increase in the ion conductivity of the second solid electrolyte 100. This enables a further increase in the charge efficiency of a battery.

As the second solid electrolyte 100, for example, Li₃YX₆, Li₂MgX₄, Li₂FeX₄, Li(Al, Ga, In)X₄, or Li₃(Al, Ga, In)X₆ can be employed where X includes at least one selected from the group consisting of F, Cl, Br, and I.

The representative composition of Li₃YX₆ is, for example, Li₃YBr₂Cl₄. The second solid electrolyte 100 may contain Li₃YBr₂Cl₄.

Such a feature enables a further increase in the charge efficiency of a battery.

The second solid electrolyte 100 may contain a sulfide solid electrolyte. As the sulfide solid electrolyte, for example, Li₂S-P₂S₅, Li₂S-SiS₂, Li₂S-B₂S₃, Li₂S-GeS₂, Li_{3.25}Ge_{0.25}P_{0.75}S₄, or Li₁₀GeP₂S₁₂ can be employed. To this, for example, LiX, Li₂O, MO_{q}, and LiₚMO_{q} may be added. In "LiX", the element X is at least one element selected from the group consisting of F, Cl, Br, and I. In "MO_{q}" and "LiₚMO_{q}", the element M is at least one element selected from the group consisting of P, Si, Ge, B, Al, Ga, In, Fe, and Zn. In "MO_{q}" and "LiₚMO_{q}", p and q are each independently a natural number.

In Embodiment 1, the second solid electrolyte 100 may be a sulfide solid electrolyte. For example, the sulfide solid electrolyte may contain lithium sulfide and phosphorus sulfide. The sulfide solid electrolyte may be Li₂S-P₂S₅.

Li₂S-P₂S₅ has high ion conductivity and is stable for oxidation and reduction. Thus, use of Li₂S-P₂S₅ enables a further increase in the charge efficiency of a battery. Note that halide solid electrolytes used as the first solid electrolyte and the second solid electrolyte may contain, as anions other than halogen elements, oxygen atoms.

### (Positive-electrode active material)

The positive-electrode active material 110 contains a material that has a property of occluding and releasing metallic ions (for example, lithium ions). As the positive-electrode active material 110, for example, a lithium-containing transition metal oxide (for example, Li(NiCoAl)O₂, Li(NiCoMn)O₂, or LiCoO₂), a transition metal fluoride, a polyanion material, a fluorinated polyanion material, a transition metal sulfide, a transition metal oxysulfide, or a transition metal oxynitride may be employed. In particular, in the case of employing, as the positive-electrode active material 110, a lithium-containing transition metal oxide, the production costs can be reduced and the average discharge voltage can be increased.

In Embodiment 1, the positive-electrode active material 110 may contain Ni, Co, and Mn. The positive-electrode active material 110 may be lithium nickel cobalt manganese oxide. For example, the positive-electrode active material 110 may be Li(NiCoMn)O₂.

Such a feature enables a further increase in the energy density and the charge efficiency of a battery.

In Embodiment 1, the form of the second solid electrolyte 100 is not particularly limited and may be, for example, acicular, spherical, or ellipsoidal. For example, the second solid electrolyte 100 may have a particulate form.

For example, in Embodiment 1, when the second solid electrolyte 100 has a particulate (for example, spherical) form, the median size may be less than or equal to 100 µm. When the median size is less than or equal to 100 µm, the covered active material 130 and the second solid electrolyte 100 can have a good dispersion state in the positive-electrode material 1000. This results in improvement in the charge-discharge characteristics of a battery. In Embodiment 1, the second solid electrolyte 100 may have a median size of less than or equal to 10 µm.

Such a feature enables, in the positive-electrode material 1000, a good dispersion state of the covered active material 130 and the second solid electrolyte 100.

In Embodiment 1, the second solid electrolyte 100 may have a median size smaller than the median size of the covered active material 130.

Such a feature enables, in the positive-electrode material 1000, a better dispersion state of the second solid electrolyte 100 and the covered active material 130.

The covered active material 130 may have a median size of greater than or equal to 0.1 µm and less than or equal to 100 µm.

When the covered active material 130 has a median size of greater than or equal to 0.1 µm, in the positive-electrode material 1000, a good dispersion state of the covered active material 130 and the second solid electrolyte 100 can be provided. This results in improvement in the charge-discharge characteristics of a battery.

When the covered active material 130 has a median size of less than or equal to 100 µm, the diffusion rate of lithium within the covered active material 130 is sufficiently ensured. This enables a battery to operate at a high power.

The covered active material 130 may have a median size larger the median size of the second solid electrolyte 100. This results in a good dispersion state of the covered active material 130 and the second solid electrolyte 100.

In the positive-electrode material 1000, as illustrated in Fig. 1, the second solid electrolyte 100 and the covered active material 130 may be in contact with each other. In this case, the cover layer 111 and the positive-electrode active material 110 are in contact with each other.

The positive-electrode material 1000 may include a plurality of particles of the second solid electrolyte 100 and a plurality of particles of the covered active material 130.

In the positive-electrode material 1000, the content of the second solid electrolyte 100 and the content of the covered active material 130 may be the same or different.

In this Description, "median size" means a particle size where the cumulative volume in the volume-based particle size distribution is equal to 50%. The volume-based particle size distribution is measured using, for example, a laser diffraction measurement apparatus or an image analysis apparatus.

The first solid electrolyte contained in the cover layer 111 and the second solid electrolyte 100 can be produced by the following method.

Raw material powders of binary halides are prepared so as to provide a mixing ratio of the target composition. For example, in the case of forming Li₃YCl₆, LiCl and YCl₃ are prepared in a molar ratio of 3:1.

In this case, the types of the raw material powders can be selected to thereby determine, in the above-described composition formulas, "M", "M1", "M2", "Me", "X", "X1", and "X2". The raw materials, the mixing ratio, and the synthesis processes can be changed to thereby adjust the above-described values "α1", "β1", "γ1", "α2", "β2", "γ2", "d", "δ", "a", "x", and "y".

The raw material powders are sufficiently mixed and subsequently a mechanochemical milling method is used to mix together, grind, and react the raw material powders. Alternatively, the raw material powders may be sufficiently mixed and subsequently sintered in vacuum.

This provides the above-described first solid electrolyte and second solid electrolyte including crystal phases.

In such a solid electrolyte, the configuration of the crystal phase (namely, crystal structure) can be determined by adjusting the process of reaction between the raw material powders and the reaction conditions.

The covered active material 130 can be produced by the following method.

The powder of the positive-electrode active material 110 and the powder of the first solid electrolyte are mixed together in an appropriate ratio to obtain a mixture. The mixture is subjected to a milling treatment to apply mechanical energy to the mixture. For the milling treatment, a mixing apparatus such as a ball mill can be used. In order to suppress oxidation of the materials, the milling treatment may be performed in a dry atmosphere and inert atmosphere.

The covered active material 130 may be produced by a dry particle composing method. The treatment by the dry particle composing method includes applying at least one mechanical energy selected from the group consisting of impact, compression, and shearing to the positive-electrode active material 110 and the first solid electrolyte. The positive-electrode active material 110 and the first solid electrolyte are mixed together in an appropriate ratio.

The apparatus used in the method for producing the covered active material 130 is not particularly limited, and can be an apparatus that applies mechanical energy such as impact, compression, or shearing to the mixture of the positive-electrode active material 110 and the first solid electrolyte. Examples of the apparatus that applies mechanical energy include compression-shearing processing apparatuses (particle composing apparatuses) such as ball mills, "MECHANO FUSION" (manufactured by Hosokawa Micron Corporation), and "NOBILTA" (manufactured by Hosokawa Micron Corporation).

"MECHANO FUSION" is a particle composing apparatus using the dry mechanical composing technology of applying strong mechanical energy to a plurality of different material particles. In MECHANO FUSION, to the powder raw materials fed between the rotating vessel and the press head, mechanical energy such as compression, shearing, and friction is applied, to thereby compose the particles.

"NOBILTA" is a particle composing apparatus using the dry mechanical composing technology developed, in order to compose nanoparticles serving as raw materials, from the particle composing technology. NOBILTA applies, to a plurality of raw material powders, mechanical energy of impact, compression, and shearing to thereby produce composite particles.

In "NOBILTA", within a horizontal cylindrical mixing vessel, a treatment of rotating, at a high speed, a rotor disposed so as to have a predetermined gap to the inner wall of the mixing vessel, to forcibly pass the raw material powders through the gap is repeated a plurality of times. This exerts, to the mixture, impact, compression, and shear forces, to produce composite particles of the positive-electrode active material 110 and the first solid electrolyte. Conditions such as the rotation speed of the rotor, the treatment time, and the charge amounts can be appropriately adjusted.

The covered active material 130 and the second solid electrolyte 100 are mixed together to thereby obtain the positive-electrode material 1000. The method of mixing together the covered active material 130 and the second solid electrolyte 100 is not particularly limited. For example, an instrument such as a mortar may be used to mix together the covered active material 130 and the second solid electrolyte 100, or a mixing apparatus such as a ball mill may be used to mix together the covered active material 130 and the second solid electrolyte 100.

The mixing ratio of the covered active material 130 to the second solid electrolyte 100 is also not particularly limited. For example, when, in the covered active material 130, the first solid electrolyte has a volume V_{γ} and the second solid electrolyte 100 has a volume V_{δ}, the mixing ratio of the covered active material 130 to the second solid electrolyte 100 is adjusted such that 0.05 < Y_{γ}/Y_{δ} < 0.97 is satisfied. This results in a further increase in the energy density and charge efficiency of a battery 2000.

The volume ratio Y_{γ}/Y_{δ} desirably satisfies the relationship of 0.13 ≤ Y_{γ}/Y_{δ} ≤ 0.43. When the volume ratio Y_{γ}/Y_{δ} is in such a range, the initial efficiency of the battery can be increased with certainty.

### (Embodiment 2)

Hereinafter, Embodiment 2 will be described. The same descriptions as in Embodiment 1 above will be appropriately omitted.

Fig. 2 is a sectional view illustrating the schematic configuration of a battery 2000 according to Embodiment 2.

In Embodiment 2, the battery 2000 includes a positive electrode 201, an electrolyte layer 202, and a negative electrode 203.

The positive electrode 201 includes the positive-electrode material 1000 according to Embodiment 1.

The electrolyte layer 202 is disposed between the positive electrode 201 and the negative electrode 203.

Such features enable an increase in the initial efficiency of the battery 2000.

In the positive electrode 201, for a ratio "v1:100 - v1" of the volume of the positive-electrode active material 110 to the total volume of the first solid electrolyte and the second solid electrolyte 100, 30 ≤ v1 ≤ 95 may be satisfied. When 30 ≤ v1 is satisfied, the energy density of the battery 2000 is sufficiently ensured. When v1 ≤ 95 is satisfied, operation at a high power can be provided.

The positive electrode 201 may have a thickness of greater than or equal to 10 µm and less than or equal to 500 µm. When the positive electrode 201 has a thickness of greater than or equal to 10 µm, the energy density of the battery 2000 is sufficiently ensured. When the positive electrode 201 has a thickness of less than or equal to 500 µm, operation at a high power can be provided.

The electrolyte layer 202 is a layer containing an electrolyte. The electrolyte is, for example, a solid electrolyte (namely, a third solid electrolyte). Thus, the electrolyte layer 202 may be a solid electrolyte layer.

As the third solid electrolyte contained in the electrolyte layer 202, a halide solid electrolyte, a sulfide solid electrolyte, an oxide solid electrolyte, a polymer solid electrolyte, or a complex hydride solid electrolyte may be employed.

When the third solid electrolyte is a halide solid electrolyte, as the halide solid electrolyte, the same halide solid electrolyte as the first solid electrolyte and/or the second solid electrolyte in Embodiment 1 may be employed. Thus, the electrolyte layer 202 may contain a halide solid electrolyte having the same composition as the composition of the first solid electrolyte and/or the second solid electrolyte.

Such features enable a further increase in the power density and further improvement in the charge-discharge characteristics of the battery 2000.

Alternatively, the third solid electrolyte may be a halide solid electrolyte having a composition different from the compositions of the first solid electrolyte and the second solid electrolyte. Thus, the electrolyte layer 202 may contain a halide solid electrolyte having a composition different from the compositions of the first solid electrolyte and the second solid electrolyte.

Such a feature enables further improvement in the charge-discharge characteristics of the battery.

When the third solid electrolyte is a sulfide solid electrolyte, as the sulfide solid electrolyte, for example, Li₂S-P₂S₅, Li₂S-SiS₂, Li₂S-B₂S₃, Li₂S-GeS₂, Li_{3.25}Ge_{0.25}P_{0.75}S₄, or Li₁₀GeP₂S₁₂ may be employed. To these, for example, LiX, Li₂O, MO_{q}, or LiₚMO_{q} may be added. In "LiX", the element X is at least one element selected from the group consisting of F, Cl, Br, and I. In "MO_{q}" and "LiₚMO_{q}", the element M is at least one element selected from the group consisting of P, Si, Ge, B, Al, Ga, In, Fe, and Zn. In "MO_{q}" and "LiₚMO_{q}", p and q are each independently a natural number.

As the third solid electrolyte, the same sulfide solid electrolyte as the second solid electrolyte in Embodiment 1 may be employed. Thus, the electrolyte layer 202 may contain a sulfide solid electrolyte having the same composition as the composition of the second solid electrolyte in Embodiment 1.

In such a feature, the sulfide solid electrolyte having high reduction stability is contained, so that a negative electrode material having a low potential such as graphite or metallic lithium can be used, and an increase in the energy density of the battery 2000 can be achieved. The feature in which the electrolyte layer 202 contains the same sulfide solid electrolyte as the second solid electrolyte 100 enables improvement in the charge-discharge characteristics of the battery 2000.

When the third solid electrolyte is an oxide solid electrolyte, examples of the oxide solid electrolyte include NASICON-type solid electrolytes represented by LiTi₂(PO₄)₃ and its element-substituted forms, (LaLi)TiO₃-based perovskite-type solid electrolytes, LISICON-type solid electrolytes represented by Li₁₄ZnGe₄O₁₆, Li₄SiO₄, LiGeO₄, and their element-substituted forms, gamet-type solid electrolytes represented by Li₇La₃Zr₂O₁₂ and its element-substituted forms, Li₃N and its H-substituted forms, Li₃PO₄ and its N-substituted forms, and glass or glass ceramic provided by adding, to a base material containing a Li-B-O compound such as LiBO₂ or LisBOs, a material such as Li₂SO₄ or Li₂CO₃.

When the third solid electrolyte is a polymer solid electrolyte, as the polymer solid electrolyte, for example, a compound derived from a polymer and a lithium salt can be employed. The polymer may have an ethylene oxide structure. The polymer that has an ethylene oxide structure can contain a large amount of lithium salt, to thereby achieve a further increase in the ion conductivity. Examples of the lithium salt include LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), and LiC(SO₂CF₃)₃. As the lithium salt, a lithium salt selected from the foregoing may be employed alone, or a mixture of two or more lithium salts selected from the foregoing may be employed.

When the third solid electrolyte is a complex hydride solid electrolyte, as the complex hydride solid electrolyte, for example, LiBH₄-LiI or LiBH₄-P₂S₅ can be employed.

The electrolyte layer 202 may contain the third solid electrolyte as the main component. In other words, the electrolyte layer 202 may contain the third solid electrolyte, for example, in a weight ratio of greater than or equal to 50% relative to the entirety of the electrolyte layer 202.

Such a feature enables further improvement in the charge-discharge characteristics of the battery 2000.

The electrolyte layer 202 may contain the third solid electrolyte in a weight ratio of greater than or equal to 70% relative to the entirety of the electrolyte layer 202.

Such a feature enables further improvement in the charge-discharge characteristics of the battery 2000.

The electrolyte layer 202 may contain, in addition to the third solid electrolyte as the main component, for example, inevitable impurities, or starting materials, by-products, and decomposition products during synthesis of the third solid electrolyte.

The electrolyte layer 202 may contain, except for impurities inevitably contained, the third solid electrolyte in a weight ratio of 100% relative to the entirety of the electrolyte layer 202.

Such a feature enables further improvement in the charge-discharge characteristics of the battery 2000.

As described above, the electrolyte layer 202 may be composed only of the third solid electrolyte.

The electrolyte layer 202 may contain two or more of the materials described as the third solid electrolytes. For example, the electrolyte layer 202 may contain a halide solid electrolyte and a sulfide solid electrolyte.

The electrolyte layer 202 may have a thickness of greater than or equal to 1 µm and less than or equal to 300 µm. When the electrolyte layer 202 has a thickness of greater than or equal to 1 µm, the positive electrode 201 and the negative electrode 203 can be separated from each other with more certainty. When the electrolyte layer 202 has a thickness of less than or equal to 300 µm, operation at a high power can be provided.

The negative electrode 203 contains a material having a property of occluding and releasing metallic ions (for example, lithium ions). The negative electrode 203 contains, for example, a negative electrode active material.

As the negative electrode active material, for example, a metallic material, a carbon material, an oxide, a nitride, a tin compound, or a silicon compound can be employed. The metallic material may be an elemental metal. Alternatively, the metallic material may be an alloy. Examples of the metallic material include metallic lithium and lithium alloys. Examples of the carbon material include natural graphite, coke, partially graphitized carbon, carbon fiber, spherical carbon, synthetic graphite, and amorphous carbon. From the viewpoint of capacity density, silicon (Si), tin (Sn), a silicon compound, or a tin compound can be employed.

The negative electrode 203 may contain a solid electrolyte. As the solid electrolyte, the solid electrolytes described as examples of the material forming the electrolyte layer 202 may be employed. Such a feature enables an increase in the lithium-ion conductivity within the negative electrode 203, and operation at a high power can be provided.

The particles of the negative electrode active material may have a median size of greater than or equal to 0.1 µm and less than or equal to 100 µm. When the particles of the negative electrode active material have a median size of greater than or equal to 0.1 µm, in the negative electrode, a good dispersion state of the negative electrode active material and the solid electrolyte can be provided. This results in improvement in the charge-discharge characteristics of the battery 2000. When the negative electrode active material has a median size of less than or equal to 100 µm, the rate of lithium diffusion within the negative electrode active material is increased. This results in the battery 2000 that can operate at a high power.

The particles of the negative electrode active material may have a median size larger than the median size of the solid electrolyte contained in the negative electrode 203. This can provide a good dispersion state of the particles of the negative electrode active material and the particles of the solid electrolyte.

For a volume ratio "v2:100 - v2" of the negative electrode active material to the solid electrolyte contained in the negative electrode 203, 30 ≤ v2 ≤ 95 may be satisfied. In the case of 30 ≤ v2, the energy density of the battery 2000 can be sufficiently ensured. In the case of v2 ≤ 95, operation at a high power can be provided.

The negative electrode 203 may have a thickness of greater than or equal to 10 µm and less than or equal to 500 µm. When the negative electrode 203 has a thickness of greater than or equal to 10 µm, the energy density of the battery 2000 can be sufficiently ensured. When the negative electrode 203 has a thickness of less than or equal to 500 µm, operation at a high power can be provided.

At least one of the positive electrode 201, the electrolyte layer 202, and the negative electrode 203 may contain, in order to improve adhesiveness between particles, a binder. The binder is used in order to improve the bindability of the material forming such an electrode. Examples of the binder include polyvinylidene fluoride, polytetrafluoroethylene, polyethylene, polypropylene, aramid resin, polyamide, polyimide, polyamide-imide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinylpyrrolidone, polyether, polyethersulfone, hexafluoropolypropylene, styrene-butadiene rubber, and carboxymethylcellulose. The binder may be a copolymer of two or more materials selected from the group consisting of tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene. Alternatively, two or more selected from the foregoing may be mixed together and used as the binder.

At least one of the positive electrode 201 and the negative electrode 203 may contain, in order to increase the electron conductivity, a conductive additive. Examples of the conductive additive include graphites such as natural graphite and synthetic graphite, carbon blacks such as acetylene black and Ketjenblack, conductive fibers such as carbon fibers and metallic fibers, fluorocarbon, powders of metals such as aluminum, conductive whiskers of, for example, zinc oxide or potassium titanate, conductive metal oxides such as titanium oxide, and conductive polymers such as polyaniline, polypyrrole, and polythiophene. Use of a carbon conductive additive enables a reduction in the costs.

Note that the battery according to Embodiment 2 can be provided as batteries having various shapes such as a coin type, a cylindrical type, a prismatic type, a sheet type, a button type, a flat type, and a laminate type.

### EXAMPLES

Hereinafter, the present disclosure will be described in detail with reference to Examples and Comparative Examples.

### < <Example 1>>

### [Preparation of second solid electrolyte]

Within an argon glove box having a dew point of less than or equal to -60°C, LiCl, LiBr, and YCl₃ serving as raw material powders were weighed in a molar ratio of LiCl:LiBr:YCl₃ = 1:2:1. A planetary ball mill (manufactured by FRITSCH GmbH, model: P-5) was used to subject the obtained mixture to a milling treatment under conditions of 25 hours and 600 rpm. This provided a powder of the second solid electrolyte represented by a composition formula of Li₃Y₁Br₂Cl₄ (hereafter, referred to as LYBC).

### [Preparation of first solid electrolyte]

Within an argon glove box having a dew point of less than or equal to -60°C, LiCl, LiBr, and YCl₃ serving as raw material powders were weighed in a molar ratio of LiCl:LiBr:YCl₃ = 1:2:1. A planetary ball mill (manufactured by FRITSCH GmbH, model: P-5) was used to subject the obtained mixture to a milling treatment under conditions of 25 hours and 600 rpm. This provided a powder of the first solid electrolyte represented by a composition formula of Li₃Y₁Br₂Cl₄.

### [Preparation of covered active material]

As the positive-electrode active material, a powder of Li(NiCoMn)O₂ (hereafter, referred to as NCM) was prepared. On NCM, a cover layer formed of Li₃Y₁Br₂Cl₄ was formed. The cover layer was formed by a compression-shearing treatment using a particle composing apparatus (NOB- MINI, manufactured by Hosokawa Micron Corporation). Specifically, the positive-electrode active material and the first solid electrolyte were weighed in a weight ratio of 97.5:2.5, and treated under conditions of a blade clearance of 2 mm and a treatment time of 10 min, to obtain the covered active material of Example 1.

### [Preparation of positive-electrode material]

Within an argon glove box, the covered active material and the second solid electrolyte in Example 1 were weighed such that the volume ratio of NCM to the solid electrolyte (total of the first solid electrolyte and the second solid electrolyte) became 73:27. These were mixed together in an agate mortar, to thereby prepare the positive-electrode material of Example 1.

### <<Example 2>>

The positive-electrode material of Example 2 was obtained by the same method as in Example 1 except that, in the compression-shearing treatment during preparation of the covered active material, the weight ratio of the positive-electrode active material to the first solid electrolyte was changed to 95:5.

### <<Example 3>>

### [Preparation of sulfide solid electrolyte]

Within an argon glove box having a dew point of less than or equal to -60°C, Li₂S and P₂S₅ serving as raw material powders were weighed in a molar ratio of Li₂S:P₂S₅ = 75:25. These were ground and mixed together using a mortar to obtain a mixture. Subsequently, a planetary ball mill (manufactured by FRITSCH GmbH, model: P-7) was used to subject the mixture to a milling treatment under conditions of 10 hours and 510 rpm. This provided a glass-form solid electrolyte. The glass-form solid electrolyte was heat-treated in an inert atmosphere under conditions of 270°C and 2 hours. This provided, as the second solid electrolyte, a glass-ceramic-form solid electrolyte Li₂S-P₂S₅.

### [Preparation of positive-electrode material]

Within an argon glove box, the covered active material of Example 1 and Li₂S-P₂S₅ serving as the second solid electrolyte were weighed such that the volume ratio of NCM to the solid electrolyte (total of the first solid electrolyte and the second solid electrolyte) became 50:50. These were mixed together using an agate mortar, to thereby prepare the positive-electrode material of Example 3.

### < <Comparative Example 1 > >

The positive-electrode material of Comparative Example 1 was obtained by the same method as in Example 1 except that NCM not having a cover layer was used.

### <<Comparative Example 2>>

The positive-electrode material of Comparative Example 2 was obtained by the same method as in Example 1 except that, in the compression-shearing treatment during preparation of the covered active material, the weight ratio of the positive-electrode active material to the first solid electrolyte was changed to 99:1.

### <<Comparative Example 3>>

The positive-electrode material of Comparative Example 3 was obtained by the same method as in Example 1 except that, in the compression-shearing treatment during preparation of the covered active material, the weight ratio of the positive-electrode active material to the first solid electrolyte was changed to 90:10.

### < <Comparative Example 4> >

The positive-electrode material of Comparative Example 4 was obtained by the same method as in Example 3 except that NCM not having a cover layer was used.

### [Measurement of pore volume]

For Example 1, Example 2, Example 3, Comparative Example 2, and Comparative Example 3, a gas adsorption amount measurement instrument (manufactured by Quantachrome Instruments, Autosorb-3) was used in accordance with the above-described method, to measure the pore volume V_{α} of NCM serving as the positive-electrode active material and the pore volume V_{β} of the covered active material. From the measurement results, the pore volume ratio V_{β}/V_{α} was calculated.

### [Measurement of specific surface area]

For Example 1, Example 2, Example 3, Comparative Example 2, and Comparative Example 3, a gas adsorption amount measurement instrument (manufactured by Quantachrome Instruments, Autosorb-3) was used in accordance with the above-described method, to measure the specific surface area S_{α} of NCM serving as the positive-electrode active material and the specific surface area S_{β} of the covered active material. From the measurement results, the specific surface area ratio S_{β}/S_{α} was calculated.

### [Measurement of weight]

For Example 1, Example 2, Example 3, Comparative Example 2, and Comparative Example 3, from the weight W_{α} of NCM serving as the positive-electrode active material and the weight W_{β} of the covered active material, the weight ratio W_{α}/W_{β} was calculated.

### [Volume ratio of solid electrolytes]

The ratio Y_{γ}/Y_{δ} of the volume V_{γ} of the first solid electrolyte to the volume Y_{δ} of the second solid electrolyte was calculated. As the volume V_{γ} of the first solid electrolyte and the volume Y_{δ} of the second solid electrolyte, the usage amounts of the first solid electrolyte and the second solid electrolyte during preparation of the positive-electrode material were used.

### [Measurement of thickness of cover layer]

For Example 1, Example 2, Example 3, Comparative Example 2, and Comparative Example 3, the above-described method was used to measure the thickness d of the cover layer in the covered active material. The covered active material was subjected to an ion milling treatment using a cross-section polisher (manufactured by JEOL Ltd., SM-09010) under conditions of an acceleration voltage of 5 kV and a processing time of 8 hours. For the covered active material, sections of particles were observed using a scanning electron microscope (manufactured by Hitachi High-Technologies Corporation, SU-70) under conditions of an acceleration voltage of 2 kV and a magnification of x100. The layer thicknesses at three points within the field of view observed were averaged to determine the thickness of the cover layer.

### [Production of battery]

The positive-electrode material, Li₃Y₁Br₂Cl₄, and glass-ceramic-form Li₂S-P₂S₅ were used to perform the following steps.

First, within an insulating outer cylinder, 60 mg of Li₂S-P₂S₅, 20 mg of Li₃Y₁Br₂Cl₄, and the positive-electrode material were sequentially stacked. At this time, the positive-electrode material was weighed such that the weight of the positive-electrode active material became 14 mg. The obtained stack was press-molded at a pressure of 720 MPa to thereby obtain a positive electrode and a solid electrolyte layer.

Subsequently, on a side of the solid electrolyte layer opposite from the side in contact with the positive electrode, a metallic Li layer (thickness: 200 µm) was formed. The resultant stack was press-molded at a pressure of 80 MPa to thereby produce a stack composed of the positive electrode, the solid electrolyte layer, and a negative electrode.

Subsequently, over and under the stack, stainless steel current collectors were disposed. To each of the current collectors, a current collection lead was connected.

Finally, an insulating ferrule was used to seal the outer cylinder to thereby shut off the interior of the outer cylinder from the outside atmosphere, to produce a battery.

In this way, batteries of Examples 1 to 3 and Comparative Examples 1 to 4 were produced.

### [Charging test]

The batteries of Examples 1 to 3 and Comparative Examples 1 to 4 were subjected to charging tests under the following conditions.

Such a battery was disposed in a thermostat at 25°C.

The battery was subjected to constant-current charging at a current of 140 µA, which corresponds to 0.05 C-rate (20 hour-rate) relative to the theoretical capacity, until the voltage reached 4.3 V. After an interval for 20 min elapsed, the battery was subjected to constant-current discharging at a current of 140 µA, which corresponds to 0.05 C-rate (20 hour-rate), until the voltage reached 2.5 V.

The ratio of the discharge capacity determined above to the charge capacity determined above was calculated as initial efficiency. The results will be described in Table 1.

**[Table 1]**

| | First solid electrolyte | Second solid electrolyte | V_{β}/V_{α} | S_{β}/S_{α} | W_{α}/W_{β} | Y_{γ}/Y_{δ} | d [nm] | Initial efficiency |
|---|---|---|---|---|---|---|---|---|
| Example 1 | LYBC | LYBC | 0.76 | 0.89 | 0.975 | 0.13 | 32 | 89% |
| Example 2 | LYBC | LYBC | 0.60 | 0.86 | 0.95 | 0.16 | 71 | 91% |
| Example 3 | LYBC | LPS | 0.60 | 0.86 | 0.95 | 0.43 | 71 | 89% |
| Comparative Example 1 | - | LYBC | - | - | - | - | 0 | 88% |
| Comparative Example 2 | LYBC | LYBC | 0.88 | 0.97 | 0.99 | 0.05 | 14 | 88% |
| Comparative Example 3 | LYBC | LYBC | 0.20 | 0.81 | 0.90 | 0.97 | 167 | 88% |
| Comparative Example 4 | - | LPS | - | - | - | - | 0 | 67% |

### <<Discussion>>

The results of Example 1, Example 2, and Comparative Examples 1 to 3 have demonstrated that, in a positive-electrode material using a positive-electrode active material having a cover layer containing a first solid electrolyte, depending on the state of the cover layer, the initial efficiency of the battery varies.

Specifically, when 0.20 < V_{β}/V_{α} < 0.88 was satisfied, an initial efficiency of 89% was achieved. The cover layer inferentially contributed to achievement of both of low electronic resistance and low interfacial resistance.

When 0.81 < S_{β}/S_{α} < 0.97 was satisfied, an initial efficiency of 89% was achieved. The cover layer inferentially contributed to achievement of both of low electronic resistance and low interfacial resistance.

When 0.90 < W_{α}/W_{β} < 0.99 was satisfied, an initial efficiency of 89% was achieved. The cover layer inferentially contributed to achievement of both of low electronic resistance and low interfacial resistance.

When 14 nm < d < 167 nm was satisfied, an initial efficiency of 89% was achieved. The cover layer inferentially contributed to achievement of both of low electronic resistance and low interfacial resistance.

From the results of Example 3 and Comparative Example 4, in the case of using, as the second solid electrolyte, a sulfide solid electrolyte, use of a positive-electrode material including a positive-electrode active material having a surface covered with a halide solid electrolyte achieved an increase in the initial efficiency of the battery. This is inferentially achieved because oxidation of the sulfide solid electrolyte was suppressed.

### Industrial Applicability

Batteries according to the present disclosure are usable as, for example, all-solid-state lithium secondary batteries.

### Reference Signs List

- 1000: positive-electrode material
- 100: second solid electrolyte
- 110: positive-electrode active material
- 111: cover layer
- 130: covered active material
- 2000: battery
- 201: positive electrode
- 202: electrolyte layer
- 203: negative electrode

## Claims

1. A positive-electrode material comprising:
a positive-electrode active material; and
a cover layer containing a first solid electrolyte and covering at least partially a surface of the positive-electrode active material,
wherein the positive-electrode active material and the cover layer constitute a covered active material,
the positive-electrode active material has a pore volume V_{α}, the covered active material has a pore volume V_{β}, the positive-electrode active material has a specific surface area S_{α}, the covered active material has a specific surface area S_{β}, and at least one selected from the group consisting of 0.20 < V_{β}/V_{α} < 0.88 and 0.81 < S_{β}/S_{α} < 0.97 is satisfied.

2. The positive-electrode material according to claim 1, wherein 0.60 ≤ V_{β}/V_{α} ≤ 0.76 is satisfied.

3. The positive-electrode material according to claim 1 or 2, wherein 0.86 ≤ S_{β}/S_{α} ≤ 0.89 is satisfied.

4. The positive-electrode material according to any one of claims 1 to 3, wherein the positive-electrode active material has a weight W_{α}, the covered active material has a weight W_{β}, and 0.90 < W_{α}/W_{β} < 0.99 is satisfied.

5. The positive-electrode material according to claim 4, wherein 0.95 ≤ W_{α}/W_{β} ≤ 0.975 is satisfied.

6. The positive-electrode material according to any one of claims 1 to 5, wherein the cover layer has a thickness of greater than 14 nm and less than 167 nm.

7. The positive-electrode material according to any one of claims 1 to 6, wherein the cover layer has a thickness of greater than or equal to 32 nm and less than or equal to 71 nm.

8. The positive-electrode material according to any one of claims 1 to 7, wherein the first solid electrolyte is represented by Composition formula (1) below,
Li_{α1}M1_{β1}X1_{γ1} Formula (1)
where α1, β1, and γ1 are each independently a value greater than 0,
M1 includes at least one element selected from the group consisting of metallic elements other than Li and metalloid elements, and
X1 includes at least one selected from the group consisting of F, Cl, Br, and I.

9. The positive-electrode material according to claim 8, wherein M1 above includes yttrium.

10. The positive-electrode material according to claim 8 or 9, wherein 2.5 ≤ α1 ≤ 3, 1 ≤ β1 ≤ 1.1, and γ1 = 6 are satisfied.

11. The positive-electrode material according to any one of claims 8 to 10, wherein X1 above includes at least one selected from the group consisting of Cl and Br.

12. The positive-electrode material according to any one of claims 8 to 11, wherein the first solid electrolyte contains Li₃YBr₂Cl₄.

13. The positive-electrode material according to any one of claims 1 to 12, wherein the positive-electrode active material contains Ni, Co, and Mn.

14. The positive-electrode material according to any one of claims 1 to 13, further comprising a second solid electrolyte.

15. The positive-electrode material according to claim 14, wherein the first solid electrolyte has a volume V_{γ}, the second solid electrolyte has a volume Y_{δ}, and 0.05 < Y_{γ}/Y_{δ} < 0.97 is satisfied.

16. The positive-electrode material according to claim 14 or 15, wherein the second solid electrolyte is represented by Composition formula (3) below,
Li_{α2}M2_{β2}X2_{γ2} Formula (3)
where α2, β2, and γ2 are each independently a value greater than 0,
M2 includes at least one element selected from the group consisting of metallic elements other than Li and metalloid elements, and
X2 includes at least one selected from the group consisting of F, Cl, Br, and I.

17. The positive-electrode material according to claim 16, wherein M2 above includes yttrium.

18. The positive-electrode material according to claim 16 or 17, wherein 2.5 ≤ α2 ≤ 3, 1 ≤ β2 ≤ 1.1, and γ2 = 6 are satisfied.

19. The positive-electrode material according to any one of claims 16 to 18, wherein X2 above includes at least one selected from the group consisting of Cl and Br.

20. The positive-electrode material according to any one of claims 16 to 19, wherein the second solid electrolyte contains Li₃YBr₂Cl₄.

21. The positive-electrode material according to claim 14 or 15, wherein the second solid electrolyte contains a sulfide solid electrolyte.

22. A battery comprising:
a positive electrode containing the positive-electrode material according to any one of claims 14 to 21;
a negative electrode; and
an electrolyte layer disposed between the positive electrode and the negative electrode.
